Europäisches Patentamt

European Patent Office

Office européen des brevets

(11) Numéro de publication: **0 278 853 B1**

## (12) FASCICULE DE BREVET EUROPEEN

(45) Date de publication de fascicule du brevet: **11.05.94**   (51) Int. Cl.5: **G05D 1/03**

(21) Numéro de dépôt: **88400222.1**

(22) Date de dépôt: **01.02.88**

(54) **Système et procédé de navigation pour la marche d'un véhicule autonome.**

(30) Priorité: **04.02.87 FR 8701343**

(43) Date de publication de la demande:
**17.08.88 Bulletin 88/33**

(45) Mention de la délivrance du brevet:
**11.05.94 Bulletin 94/19**

(84) Etats contractants désignés:
**AT BE CH DE ES FR GB GR IT LI LU NL SE**

(56) Documents cités:
| | |
|---|---|
| EP-A- 0 208 384 | FR-A- 2 120 270 |
| FR-A- 2 239 375 | FR-A- 2 549 252 |
| GB-A- 2 074 760 | JP-A-60 209 821 |
| US-A- 2 493 755 | US-A- 4 472 716 |

PATENT ABSTRACTS OF JAPAN, vol. 10, no. 72, (P-438)[2129], 22 mars 1986;& JP-A-60 209 821 (NIPPON DENKI K.K.) 22.10.1985

(73) Titulaire: **PROTEE Groupement d'Intérêt Economique**
**159, Boulevard de la Villette**
**F-75010 Paris(FR)**

(72) Inventeur: **Lemercier, Pierre**
**15, rue du 16 Août 1944**
**F-38950 Saint Martin Le Vinoux(FR)**
Inventeur: **Trystram, Philippe**
**1, Boulevard de Jomardière**
**F-38120 Saint Egrève(FR)**

(74) Mandataire: **Mongrédien, André et al**
**c/o BREVATOME**
**25, rue de Ponthieu**
**F-75008 Paris (FR)**

## Description

La présente invention concerne un système de navigation d'un véhicule autonome parcourant un trajet déterminé, mais qui peut cependant être modifié, et dépourvu de pilotage par un conducteur ; elle concerne également un procédé utilisant ce système.

Par navigation, on entend le repérage de la position du véhicule le long de ce trajet et la commande d'organes embarqués, notamment directeurs et moteurs, pour suivre le trajet et corriger les déviations. Comme le véhicule est autonome, la navigation s'effectue par reconnaissance automatique de points de repère fixes qui permettent également de commander tout autre organe nécessaire à la mission du véhicule.

Les véhicules concernés, tels qu'un robot de nettoiement dans une station de métro ou une usine, doivent parcourir, après une programmation adéquate, des trajets déterminés de manière répétitive. Comme leur longueur peut être importante (un robot de nettoiement effectue son travail en parcourant des bandes parallèles sur une surface), il est exclu de les guider par des moyens mécaniques tels que des rails. Tout guidage par des systèmes de repérage visibles aisément détériorables tels que des bandes réfléchissantes est aussi exclu. Sont également exclus les fils émetteurs de champ magnétique, parcourus par un courant alternatif et enterrés dans le sol, qui sont quant à eux très fiables mais qui nécessitent des travaux d'installation importants tout en se prêtant difficilement à des modifications de tracé. Cette solution, fréquemment décrite, n'a cependant jamais bénéficié d'une grande vogue pour ces raisons.

On a encore proposé des moyens de repérage passifs tels que des corps métalliques enterrés soumis à l'excitation d'un électro-aimant embarqué sur le véhicule et qui leur fait émettre un champ magnétique que l'on recueille et mesure. Cette solution n'est absolument pas sûre car le véhicule peut se méprendre et identifier comme borne de repérage un déchet métallique abandonné au sol, ce qui l'égare alors immédiatement.

Un exemple est décrit dans le document FR-A-2 549 252, où les repères sont des plaques métalliques ou de couleur disposées en triangles de guidage ou de groupes de barres de codage d'informations.

L'invention permet de proposer un système de navigation d'un véhicule autonome dépourvu de ces inconvénients et qui utilise en particulier des balises magnétiques discontinues enterrées dans le sol. Cette solution présente, sur les systèmes continus par bande ou fil, les avantages d'être de prix modique, d'installation simple, de se prêter aisément à des altérations du trajet du véhicule et, comme on va le voir, de servir à la fois au guidage et à la commande d'autres fonctions du véhicule.

Les balises sont constituées par des aimants permanents implantés dans le sol et répartis de façon à engendrer des champs magnétiques localisés différenciés. Ces aimants, une fois recouverts, sont parfaitement protégés et leur durée de vie est importante. Une autre solution possible conduit à prévoir l'inclusion de produits aimantés dans la réalisation même du sol (carrelages, ciments ou autres) sans avoir à effectuer un perçage de celui-ci.

Le document FR-A-2 120 270 décrit des aimants permanents insérés à la surface d'une route, ou enterrés, sous forme de bandes longitudinales d'aimants de polarités alternées pour fournir à une automobile une indication de sa vitesse, ou sous forme de bornes isolées pour signaler l'approche d'un danger ou un parcours en sens interdit et qui ne sont donc pas suffisants pour guider un véhicule autonome.

Le sujet du document US-A-2 493 755 est analogue.

Le véhicule autonome de l'invention évolue successivement au-dessus des balises, et ses déviations latérales sont repérées à l'aide d'une rangée de détecteurs magnétiques portés par le véhicule et disposés perpendiculairement au sens de la marche de celui-ci.

Il est donc possible d'obtenir une distribution d'informations selon la largeur du véhicule sous forme d'une fonction en escalier que l'on peut comparer avec des distributions de référence (avec une position connue du véhicule) pour en déduire la position des bornes par rapport à la rangée. Avec un tel procédé, l'incertitude sur la position latérale du véhicule est égale en pratique à un demi-intervalle entre détecteurs à gauche ou à droite en supposant les détecteurs régulièrement répartis.

On peut améliorer sensiblement la précision de la localisation si le véhicule est pourvu d'un moyen d'interpolation des distributions de référence en fonction du décalage des détecteurs pour en déduire la distribution effectivement mesurée.

De plus, l'association dans une balise d'un groupe d'aimants de pôles positif et négatif (Nord et Sud) permet d'inclure localement un message codé en code binaire ou ternaire. Ce message décodé à bord peut fournir des éléments de repérage de position ou transmettre des instructions déterminées.

Le document JP-A-60 209 821 décrit une rangée transversale de détecteurs pour guider un véhicule autonome en combinaison avec un repère linéaire continu. Des bornes isolées sont également établies.

L'invention est exprimée sous sa forme la plus générale par les revendications 1 et 11, et des modes préférés par les revendications dépendantes.

La réalisation préférée de l'invention va à présent être décrite avec des variantes possibles et de manière illustrative et non limitative à l'aide des figures annexées suivantes :

- la figure 1 représente un véhicule équipé de l'invention et évoluant sur un sol muni de balises conformes à l'invention,
- la figure 2 représente un ensemble électronique de traitement des informations des détecteurs,
- la figure 3 représente une distribution d'information typique avec une rangée de détecteurs,
- la figure 4 représente un organigramme de traitement des informations obtenues par les détecteurs pour le repérage du véhicule,
- la figure 5 représente le mode de correction des déviations du véhicule,
- la figure 6 détaille le procédé de correction des déviations du véhicule et de lecture des informations fournies par les balises magnétiques,
- les figures 7 et 8 représentent diverses possibilités d'implantation des balises magnétiques au sol.

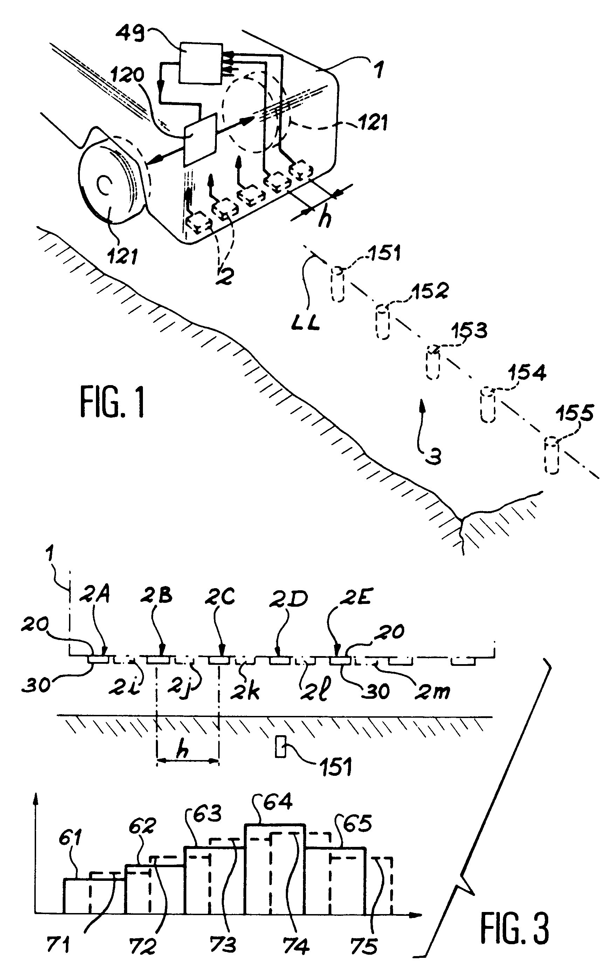

D'après la figure 1, le sol sur lequel évolue le véhicule autonome 1 est muni de balises 3 composées d'aimants permanents positifs et négatifs créant des champs magnétiques localisés.

Dans leur réalisation la plus générale, les balises 3 consistent en un nombre quelconque d'aimants permanents et répartis de manière quelconque dans un nombre également quelconque de rangées transversales, et à des intervalles quelconques parmi ces rangées. Le véhicule 1 passe successivement au-dessus de chaque rangée d'aimants permanents pour détecter un profil de champ magnétique caractéristique de la rangée transversale et qui peut donc être représentatif d'une information déterminée.

Une réalisation préférée est toutefois celle qui est représentée, dans laquelle chaque balise 3 comprend plusieurs aimants permanents répartis à des intervalles réguliers sur une seule ligne longitudinale LL dans la direction du trajet du véhicule 1. Les aimants permanents peuvent ainsi être au nombre de cinq au maximum et tous uniformes à l'exception du signe de leur aimantation. Ils peuvent consister en des cylindres placés verticalement, de 3 ci de longueur et 5 mm de diamètre, dont le sommet est à 2 cm environ de la surface du sol et qui sont espacés de 125 mm par exemple.

Le véhicule 1 passe successivement au-dessus des aimants permanents référencés, sur cette figure 1, 151, 152, 153, 154 et 155.

Les balises 3 ainsi enfouies dans le sol le long du trajet que doit parcourir le véhicule 1 sont de types variés. Le nombre et la polarité des sources magnétiques constituent une personnalisation, c'est-à-dire une signature pour la distinguer des bornes voisines.

Le véhicule 1 comprend une rangée de détecteurs 2 de champ magnétique disposés sous le châssis selon une rangée transversale. Leur nombre peut être choisi, de façon plausible, entre cinq et vingt selon la largeur du véhicule. Leur répartition peut être uniforme ou non ; ici, on se place dans le premier cas et on appelle h leur espacement, qui doit être nettement inférieur à l'intervalle entre aimants 151 à 155. On peut proposer seize détecteurs 2 espacés de 2 cm.

Le véhicule 1 comprend des moyens moteurs et directeurs pour le déplacer sur la surface du sol, par exemple un moteur électrique 120 entraînant des roues avant pivotantes ou braquables 121. Une locomotion à chenilles, plus stable, peut aussi être envisagée, ou encore une disposition avec des roues avant non braquables et commandées chacune par un moteur propre qui peut leur imprimer une vitesse différentielle pour diriger le véhicule. Le véhicule 1 est également pourvu d'appareils divers non représentés qui lui permettent d'accomplir sa mission au cours de son déplacement, par exemple des brosses, aspirateurs et appareils de lavage dans le cas d'un robot de nettoiement. Le fonctionnement du moteur 120, des roues 121 et de ces autres appareils est commandé par une centrale de pilotage 49 en fonction des indications fournies par les détecteurs 2 et d'autres détecteurs non représentés qui peuvent inclure des détecteurs d'obstacle et une centrale inertielle à gyroscope.

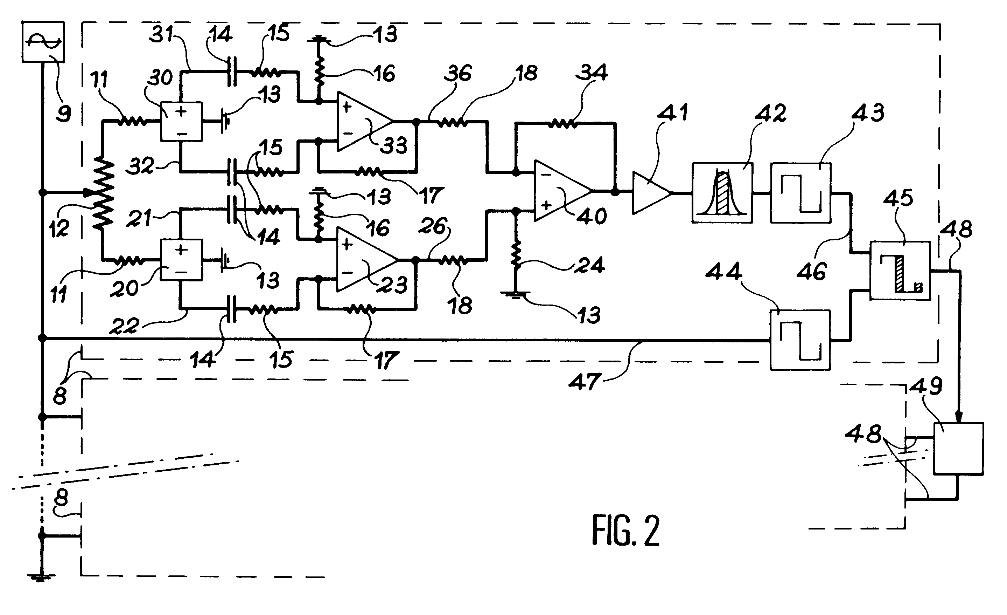

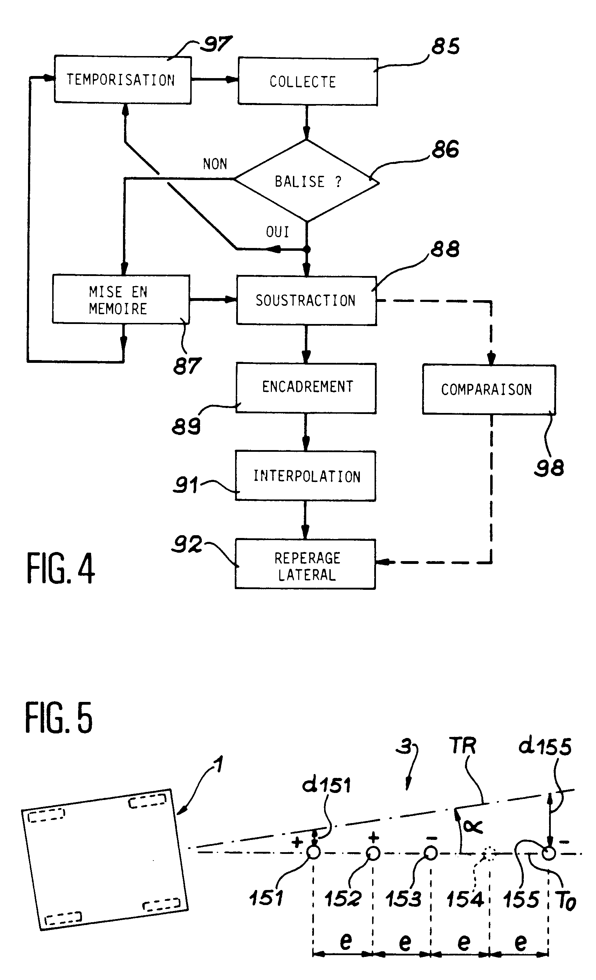

Au cours de son déplacement, le véhicule 1 passe au-dessus d'une succession de balises 3. Quand l'une d'entre elles est atteinte, son champ magnétique est repéré par les détecteurs 2 et informe le véhicule 1 de sa position par rapport à la balise 3 et des tâches à effectuer alors. La constitution et le fonctionnement des détecteurs 2 vont maintenant être décrits à l'aide des figures 2 et 3.

Dans une réalisation concrète, les détecteurs 2 utilisent l'effet Hall : une bande conductrice parcourue suivant sa longueur par un courant électrique et plongée dans un champ magnétique perpendiculaire à sa surface est le siège d'un champ électrique dans le sens de sa largeur, qui peut fournir une tension induite.

Ici, chaque détecteur 2 est constitué d'une paire de tels capteurs 20 et 30 à effet Hall. La tension alimentant ces capteurs 20 et 30 est issue d'une source 9 et est périodique. On peut utiliser une tension sinusoïdale à haute fréquence (plusieurs centaines ou milliers de Hertz) de manière à éliminer le bruit basse fréquence - on reviendra plus loin sur ce problème - mais il est avantageux d'y superposer une tension continue de manière à ce que le signe de la tension résultante ne change pas, évitant ainsi une polarisation dynamique des capteurs 20 et 30.

La ligne d'alimentation des détecteurs 2 relie la source 9 à un potentiomètre 12, où elle bifurque vers les deux capteurs 20 et 30 qu'elle atteint après avoir traversé une résistance 11 ; le potentiomètre 12 permet d'égaliser les courants parcourant les deux branches de la bifurcation. Après avoir traversé les capteurs 20 ou 30, la ligne arrive à la masse 13.

L'effet Hall crée une tension induite entre les lignes 21 et 22 issues du capteur 20, ainsi qu'une tension induite entre les lignes 31 et 32 issues du capteur 30 ; ces tensions ont des intensités différentes, ce qui est souhaité et s'obtient automatiquement car les capteurs 20 et 30 sont voisins dans un champ magnétique non uniforme. Ils sont par exemple l'un au-dessus de l'autre, à quelques millimètres, comme le montre la figure 3.

Les tensions induites dans chacune des lignes 21, 22, 31 et 32 sont amplifiées par un condensateur 14 et une résistance 15 égaux et disposés en série, après quoi on obtient les tensions induites dans les capteurs 20 et 30 en soustrayant la tension de la ligne 32 à la tension de la ligne 31 dans un soustracteur 33, et, de façon semblable, en soustrayant la tension de la ligne 22 à la tension de la ligne 21 dans un soustracteur 23. Les différences de tension se retrouvent dans les lignes 36 et 26 respectivement en aval des soustracteurs 33 et 23 ; il faut en outre noter que les lignes 22 et 26 d'une part, 32 et 36 d'autre part, sont reliées près des soustracteurs 23 et 33 par des résistances 17 de même valeur, et que les lignes 21 et 31 sont reliées, près des soustracteurs 23 et 33, par des résistances 16 de valeur égale à celles des résistances 17 à la masse 13.

De tels circuits permettent d'imprimer un déphasage aux tensions amplifiées, déphasage variable en fonction de la tension : comme on a vu que les tensions étaient différentes au départ, il en résulte que les tensions sur les lignes 26 et 36 ne sont pas en phase.

Après un étage d'amplification, qui peut être constitué d'une résistance 18 de même valeur sur chacune des lignes 26 et 36, la tension sur la ligne 36 est soustraite de celle sur la ligne 26 au moyen d'un soustracteur 40 et la différence passe sur une ligne 46. Les lignes 36 et 46 sont reliées, près du soustracteur 40, par une résistance 34 ; d'autre part, la ligne 26 est reliée, près du soustracteur 40, à la masse 13 par une résistance 24 de même valeur que la résistance 34.

La tension sur la ligne 46 est amplifiée par un amplificateur 41, puis passe par un filtre 42 et par un transformateur 43 qui la convertit en tension rectangulaire.

La phase du signal est alors comparée à une phase de référence, par exemple celle de la tension issue de la source 9 après passage dans une ligne 47 et par un transformateur 44 qui la convertit en tension rectangulaire. Le comparateur de phase 45 peut être de tout type connu, mais fournit de préférence à une ligne 48 un signal linéaire en fonction du déphasage constaté.

L'ensemble 8 constitué par le potentiomètre 12, les résistances 11, les capteurs 20 et 30 et le circuit électronique en aval est identique pour tous les détecteurs 2. On obtient donc un certain nombre de signaux de déphasage alimentant la centrale de pilotage 49 -qui contient en particulier un calculateur de bord- par les lignes 48, c'est-à-dire une distribution spatiale de déphasage dont l'utilité apparaît par le commentaire de la figure 3.

La centrale de pilotage 49 qui effectue les opérations que l'on va décrire possède en effet en mémoire des distributions à la suite d'un étalonnage préliminaire, avec une position connue du véhicule 1 vis-à-vis de la balise 3 considérée.

Sur la figure 3, on représente une distribution de déphasage de référence ou d'étalonnage, qui avait été mesurée quand par exemple un détecteur 2D, parmi cinq détecteurs 2A à 2E, d'un aimant tel que 151, les niveaux 61 à 65 étant associés respectivement aux détecteurs 2A à 2E. Le véhicule 1 peut encore être pourvu d'autres détecteurs de part et d'autre de ceux qui sont représentés, mais ils n'interviennent pas dans ce cas car ils passent à l'écart de la balise 3 et n'enregistrent aucun signal notable.

Quand le véhicule 1 repasse au-dessus de la balise 3, au cours d'un de ses trajets, c'est avec un décalage latéral par rapport à sa position d'étalonnage : les détecteurs les plus proches des positions associées aux détecteurs 2A à 2E sont référencés 2i à 2m et leur distribution de déphasage est indiquée par les niveaux expérimentaux 71 à 75 qu'ils mesurent respectivement et dont la connaissance va permettre au véhicule 1 d'assumer sa mission. L'explication est entreprise à l'aide de la figure 4 en ce qui concerne la connaissance de la position latérale du véhicule 1 par rapport à la balise 3.

Le processus utilisé comprend tout d'abord une étape périodique de collecte 85 des informations fournies par les détecteurs 2, puis une prise de décision 86 selon qu'ils passent au-dessus d'une balise 3 ou non.

Si les détecteurs 2 n'enregistrent qu'un bruit de fond caractérisable par son niveau assez bas et sa basse fréquence, les informations des détecteurs 2 sont mises en mémoire par une étape de mémorisation 87 et la collecte 85 reprend après une temporisation 97.

Si une balise 3 est détectée, on procède à une soustraction 88 des informations saisies au cours de la mémorisation 87 précédente, ce qui permet d'éliminer le bruit de fond dont le niveau change relativement lentement. Cette soustraction 88 n'est cependant pas obligatoire en pratique, si on se contente d'un repérage latéral approché.

On dispose alors d'une distribution expérimentale 71 à 75 qu'il faut comparer à une distribution de référence 61 à 65. On sélectionne au moins un niveau expérimental 71 à 75 et on cherche, dans une réalisation possible du procédé, son niveau de référence 61 à 65 le plus proche.

Par exemple, on peut s'intéresser au niveau 71 délivré par le détecteur 2i et décréter que le niveau de référence 61 le plus proche a été délivré par le détecteur 2A. On conclut alors que le détecteur 2i est à la position du détecteur 2A, et cette comparaison 98 permet donc de déterminer la position latérale du véhicule 1 à un demi-intervalle h/2 près entre détecteurs à gauche ou à droite dans le cas où ils sont uniformément répartis.

Dans une réalisation plus soignée du procédé, on réalise cependant, après la soustraction 88, un encadrement 89 du ou des niveaux expérimentaux sélectionnés par des niveaux de référence : si on reprend l'exemple, on détermine que le niveau 71 délivré par le détecteur 2i est compris entre les niveaux 61 et 62 délivrés par les détecteurs voisins 2A et 2B. On procède alors à une interpolation linéaire 91 pour déterminer la position du détecteur 2i dans l'intervalle entre les détecteurs 2A et 2B. La position latérale du véhicule 1 est connue avec une précision bien meilleure.

Il est bien sûr possible et souhaitable de faire porter la comparaison 98 ou l'encadrement 89 sur plusieurs détecteurs à la fois ; les imprécisions s'en trouvent réduites.

Ou encore, si la rangée de détecteurs 2 passe par exemple au-dessus de l'aimant permanent 151 avec le détecteur noté 2l qui enregistre le plus fort niveau expérimental 74 , alors que dans la position latérale de référence le détecteur 2D était au-dessus de l'aimant 151 et enregistrait ainsi le plus fort niveau de référence 64, il est possible de relever simplement le plus fort niveau expérimental 74 et d'assimiler, par une opération de comparaison 98, la position de référence du détecteur 2D et la position expérimentale du détecteur 2l. Des interpolations linéaires entre niveaux expérimentaux et de référence peuvent, ici également, permettre d'obtenir des informatons plus précises de position latérale du véhicule 1.

Les comparaisons 98 ou les interpolations 91 permettent donc de déterminer le repérage latéral 92 du véhicule 1.

Les collectes 85 s'effectuent ensuite régulièrement après la temporisation 97.

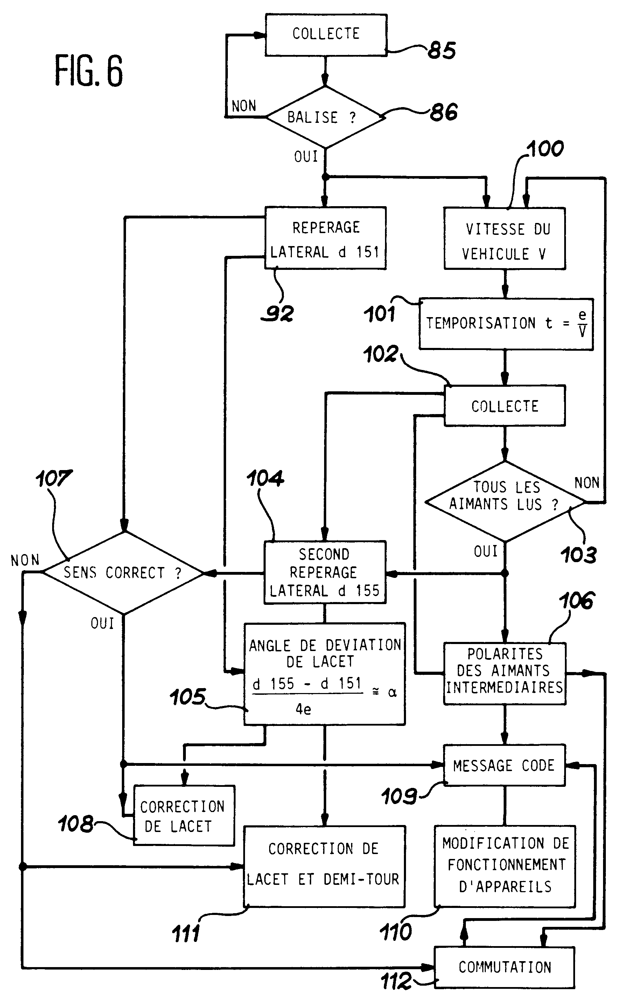

Un problème subsiste cependant, puisque le simple repérage de la position latérale du véhicule 1 ne suffit ni pour pouvoir le diriger, ni pour permettre de commander d'autres organes. Les figures 5 et 6 montrent comment y parvenir avec une balise 3 conforme à la figure 1, et qui comprend donc cinq emplacements d'aimants 151, 152, 153, 154 et 155 alignés.

Les deux aimants extrêmes 151 et 155 sont de polarités opposées, ici respectivement positive et négative. Les aimants 152, 153 et 154 intermédiaires peuvent être indifféremment positif ou négatif et donnent alors un codage binaire qui donne ici $2^3 = 8$ possibilités. Dans une réalisation équivalente, on peut encore omettre ces aimants intermédiaires 152, 153 et 154, ce qui permet d'obtenir un codage ternaire avec $3^3 = 27$ possibilités dans le cas de trois aimants.

Le passage du véhicule 1 au-dessus de la balise 3 amène concrètement les opérations que l'on va maintenant décrire.

Comme dans la description de la figure 4, des collectes 85 périodiques sont effectuées, et la balise 3 est repérée quand les détecteurs 2 arrivent sur le premier aimant 151. On obtient le repérage latéral 92 du véhicule 1, c'est-à-dire la déviation d151 du trajet réel, expérimental, TR du véhicule par rapport au trajet théorique To passant droit sur la balise 3. Parallèlement la vitesse V du véhicule 1 est relevée à l'aide d'un capteur de vitesse quelconque en une étape 100, et la centrale de pilotage 49 effectue un calcul de temporisation 101 qui lui fournit un temps de temporisation $T = e/V$, où e est l'espacement entre deux aimants permanents consécutifs. Quand ce temps de temporisation est écoulé, une collecte d'information 102 est effectuée au-dessus de l'aimant permanent suivant (ici 152) par les détecteurs 2, qui donne une nouvelle distribution de valeurs expérimentales qui sont stockées en mémoire. Une boucle 103 permet de s'assurer que des distributions expérimentales ont été obtenues pour tous les aimants de la balise 3 ; dans la négative, le processus de relevé de vitesse 100, de temporisation 101 et de collecte 102 est répété au-dessus de l'aimant permanent suivant ; dans l'affirmative, la centrale de pilotage 49 sait que la dernière distribution relevée est celle du dernier aimant permanent 155. Un second repérage latéral 104 est effectué, qui donne la déviation d155 du véhicule 1 par rapport au dernier aimant permanent 155. Il est alors possible de calculer l'angle de déviation de lacet α qui, dans la pratique, est petit et s'obtient par la formule $\alpha = (d155-d151)/4e$. Ce calcul est effectué au cours d'une étape 105. Une étape 106 de détermination des polarités (positive, négative ou éventuellement nulle) des aimants intermédiaires 152, 153 et 154 s'effectue en même temps. Il a toutefois fallu prévoir le cas, improbable il est vrai, où le véhicule 1 se serait égaré au point de retomber sur la balise 3 après un trajet incorrect et de la parcourir dans le mauvais sens, en commençant par le dernier aimant 155. C'est pour cette raison que les aimants extrêmes 151 et 155 sont de polarités opposées. Une étape 107 de vérification de l'ordre des polarités rencontrées pour les aimants extrêmes 151 et 155 permet de vérifier si le sens de marche du véhicule 1 est correct. Dans l'affirmative, une correction de lacet 108 est appliquée aux organes directeurs du véhicule 1, tels que des roues pivotantes, correction égale sensiblement à l'opposé de l'angle de déviation $\alpha$ en appliquant éventuellement un facteur correcteur en fonction de la déviation moyenne $(d151+d155)/2$, afin de permettre au véhicule 1 de passer le plus près possible de la balise suivante ; par ailleurs l'ensemble des polarités des aimants intermédiaires 152, 153 et 154 constitue un message codé 109 qui entraîne, après sa lecture et son interprétation par la centrale de pilotage 49, des modifications de fonctionnement 110 d'appareils situés sur le véhicule 1 tels que, dans le cas d'un robot de nettoiement, des débuts ou des interruptions de lavage, d'aspiration ou de brossage. On peut également commander des quarts de tour, des demi-tours et l'arrêt du véhicule par ces messages codés 109.

Si le sens de marche du véhicule 1 est incorrect, on lui applique une correction de lacet 111 sensiblement égale à la précédente plus un demi-tour, qui remette donc le véhicule 1 dans le sens correct du trajet. On effectue également une inversion ou commutation 112 de l'ordre des polarités successivement relevées sur les aimants intermédiaires 152, 153 et 154 afin de rétablir le message codé 109 correct.

On va maintenant énumérer et développer certains des avantages de l'invention à l'aide des dernières figures.

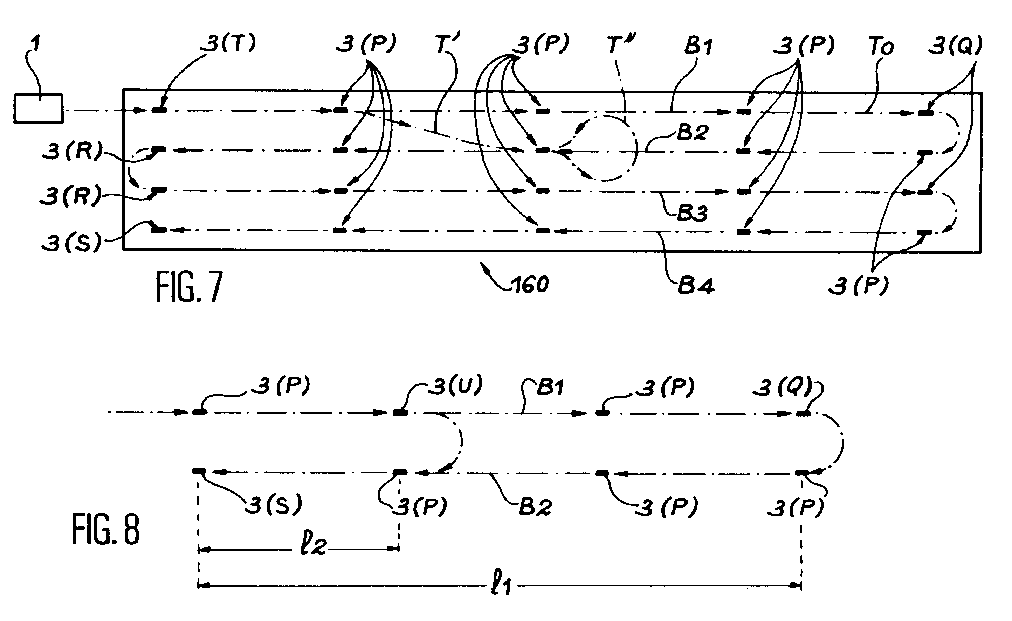

La figure 7 représente l'implantation de balises 3 dans le sol d'une surface rectangulaire 160, par exemple un quai de métro à nettoyer, que le véhicule 1 doit sillonner par un trajet To qui se décompose en bandes parallèles B1 à B4 parcourues en sens alterné. Chacune de ces bandes B1 à B4 est munie de balises 3 conformes à la figure 1 dont les aimants intermédiaires 152, 153, 154 corespondent à un code que l'on indique par une lettre entre parenthèses pour chaque balise 3. La plupart affichent le code P qui indique au véhicule 1 de progresser en ligne droite ; à l'extrémité de chaque bande B1 à B3, le véhicule 1 rencontre par contre une balise 3 portant le code Q ou R selon le cas, qui lui ordonne d'effectuer un demi-tour à droite ou à gauche pour lui permettre de se raccorder à la bande suivante ; l'extrémité de la dernière bande B4 peut être munie d'une balise portant le code S qui arrête le véhicule 1, sa mission étant alors terminée, jusqu'à une intervention manuel le ; enfin, la première balise de la première bande B1 porte un code T qui indique à la fois une ligne droite et le début des opérations de nettoiement.

Cette figure, où on s'est efforcé de respecter les échelles, montre immédiatement la supériorité du dispositif selon l'invention par rapport aux dispositifs connus à fil de guidage : un tel fil devrait être placé sur la totalité du trajet To, aurait donc une grande longueur et serait difficile et coûteux à installer, alors que, avec les données numériques déjà fournies (chaque balise 3 comportant cinq aimants permanents espacés de 125 mm environ), chaque balise 3 peut être espacée de la suivante d'une distance pouvant atteindre dix mètres si cette distance est parcourue par le véhicule 1 en ligne droite. Il suffit en outre d'effectuer des perçages, faciles, rapides et localisés, dans le sol pour installer ou remplacer les balises 3.

On pourrait cependant craindre qu'un balisage discontinu n'accroisse les risques que le véhicule 1 s'égare à la suite d'une imprécision de direction. Ces risques sont en réalité très limités. Si on suppose, avec une rangée de détecteurs 2 large de trente centimètres et le véhicule parfaitement centré sur une première balise, une déviation de trajet le faisant passer en-dehors de la balise suivante impliquerait une erreur latérale de quinze centimètres sur un trajet de dix mètres, soit une erreur angulaire d'environ un degré que les moyens modernes de pilotage tels que les centrales inertielles devraient permettre d'éviter.

En cas de déréglage important, le véhicule 1 est de toute façon muni de capteurs d'obstacle par infrarouge qui permettent de bloquer le véhicule 1 à l'approche d'un mur ou d'une dénivellation. La centrale de pilotage 49 peut également être programmée pour arrêter le véhicule 1 et donner l'alarme si aucune balise 3 n'a été repérée après un parcours trop long.

On peut aussi, avec une configuration de balises 3 telles que celle représentée figure 7, voir arriver le cas évoqué dans le commentaire de la figure 6 : celui d'atteindre une balise 3 en sens incorrect après une déviation anormale, à la suite par exemple d'un tronçon de trajet incorrect T' qui amènerait le véhicule d'une bande B1 à la bande voisine B2 sans demi-tour. La centrale de pilotage 49 détecte immédiatement le sens incorrect et arrête le véhicule 1 ou éventuellement lui fait effectuer une boucle T" qui le ramène dans le bon sens et lui permet de parcourir correctement la bande B2 et de continuer sa mission.

Des déviations anormales du trajet To devraient toutefois rester exceptionnelles.

La figure 8 montre qu'on peut affecter des missions différentes au véhicule 1 sans changer le balisage, ce qui n'est pas non plus possible avec d'autres systèmes de repérage. Une balise 3 peut ainsi porter un code U qui, en fonction de la programmation de la centrale de pilotage 49, peut se voir attribuer tour à tour la même signification que les codes P ou Q, c'est-à-dire l'avance en ligne droite ou le demi-tour à droite. Dans le premier cas et avec la configuration représentée, le véhicule 1 parcourt un trajet sur la longueur totale l1 de deux bandes parallèles B1 et B2 ; dans le second, il parcourt un trajet sur une longueur réduite l2 de ces bandes B1 et B2.

L'invention constitue donc une solution intéressante pour la navigation et la commande automatique de véhicules devant accomplir des missions déterminées à l'avance et répétitives. Aucun moyen informatique compliqué n'est nécessaire ; la programmation de la centrale de pilotage 49 se borne à faire lire à des détecteurs des distributions de champ magnétique et à interpréter ces distributions pour en déduire des polarités et à des codes, ou encore des informations de déviation latérale. Il n'est pas nécessaire de décrire au véhicule 1 le trajet et les missions qu'il doit accomplir par une programmation préalable, car il les apprend au fur et à mesure en arrivant devant chaque balise 3.

**Revendications**

1. Système de navigation pour la marche d'un véhicule autonome effectuant un trajet déterminé (To) sur un sol muni d'aimants permanents (151 à 155), le véhicule comportant des moyens moteurs (120) et directeurs (121), des détecteurs (2) de champ magnétique captant des champs magnétiques émis par les aimants, le véhicule comprenant un ensemble électronique (8, 49) apte à commander les moyens moteurs et directeurs à l'aide d'informations qui lui sont fournies par les détecteurs, les détecteurs étant arrangés sur le véhicule suivant une rangée transversale, le système comprenant des balises composées chacune d'aimants permanents disposés en ligne suivant le trajet du véhicule, les aimants étant enfoncés verticalement dans le sol de manière qu'une polarité de chaque aimant soit détectée par les détecteurs, caractérisé en ce que les balises (3) sont séparées par des intervalles (l2) plus grands que la longueur des balises, chaque balise étant composée d'un premier groupe d'aimants (151 et 155), espacés de distances déterminées, dont les polarités sont agencées de manière à fournir des informations du cap ($\alpha$) suivi par le véhicule par rapport à la ligne de la balise ainsi que d'un second groupe d'aimants (152 à 154) dont les polarités sont agencées de manière à fournir des informations pour guider le véhicule sur une portion subséquente du trajet jusqu'à une balise suivante au moyen de messages codés, les aimants des deux groupes étant situés à des emplacements déterminés de chaque balise.

2. Système de navigation selon la revendication 1, caractérisé en ce que les aimants permanents d'une balise sont enfoncés dans le sol suivant une ligne uni que (LL), la rangée transversale de détecteurs passant successivement au-dessus de chaque aimant permanent au cours du trajet du véhicule.

3. Système de navigation selon l'une quelconque des revendications 1 ou 2, caractérisé en ce que les aimants du premier groupe comprennent une paire d' aimants aux extrémités de la balise.

4. Système de navigation selon l'une quelconque des revendications 1 à 3, caractérisé en ce que les aimants du premier groupe sont deux aimants dissemblables (151, 155).

5. Système de navigation selon la revendication 1, caractérisé en ce que les balises comportent des aimants de polarités opposées Nord et Sud, les informations de guidage du véhicule étant codées suivant un code binaire.

6. Système de navigation selon la revendication 1, caractérisé en ce que les balises comportent des aimants de polarités opposées Nord et Sud, les informations de guidage du véhicule étant codées suivant un code ternaire.

7. Système de navigation selon la revendication 1, caractérisé en ce que les détecteurs (2) comprennent chacun une paire de capteurs (20 et 30) qui produisent deux courants induits sous l'influence du champ magnétique produit par les aimants permanents, et en ce que l'ensemble électronique comporte un moyen pour soustraire lesdits courants induits.

8. Système de navigation d'un véhicule selon la revendication 7, caractérisé en ce que les capteurs (20 et 30) sont alimentés par une tension électrique périodique conservant toujours le même signe.

9. Système de navigation selon la revendication 8, caractérisé en ce que l'ensemble électronique comprend, pour chaque détecteur (2), un circuit déphaseur (16, 17, 23, 33) des courants induits dans chaque capteuren fonction de leur intensité, un circuit soustracteur (24, 34, 40) des courants déphasés et un comparateur de phase (45) qui fournit un signal en fonction du déphasage entre un courant périodique issu du soustracteur (24, 34, 40) et un courant de référence de même fréquence.

10. Système de navigation selon la revendication 9, caractérisé en ce qu'il comprend un potentiomètre (12) intercalé entre l'alimentation (9) et chaque paire de capteurs (20 et 30).

11. Procédé de navigation pour la marche d'un véhicule autonome effectuant un trajet (To) sur un sol muni d'aimants permanents (4, 5, 151 à 155) regroupés en balise (3), le véhicule comportant des moyens moteurs (120) et directeurs (121) commandés par un ensemble électronique et une rangée transversale de détecteurs (2) de champ magnétique reliés à l'ensemble électronique, les aimants étant enfoncés verticalement dans le sol de manière qu'une polarité de chaque aimant soit détectée par les détecteurs, caractérisé en ce qu'il consiste, les balises (3) étant séparées par des intervalles plus grands que la longueur des balises, à effectuer des lectures périodiques de champ magnétique par les détecteurs pour repérer le passage du véhicule par-dessus les aimants, à calculer par l'ensemble électronique, à chaque balise, le cap suivi par le véhicule à l'aide des positions transversales par rapport au véhicule d'un premier groupe d'aimants (151, 155), espacés de distances prédéterminées, de la balise, à déduire par l'ensemble électronique des informations de guidage du véhicule sur une portion subséquente du trajet à l'aide d'un second groupe d'aimants (152 à 154), disposés de manière à fournir des messages codés, de la balise, les aimants des deux groupes étant situés à des emplacements déterminés de chaque balise, et à commander les organes moteurs et directeurs en fonction du cap ($\alpha$) suivi par le véhicule et des mes sages codés.

12. Procédé de navigation selon la revendication 11, caractérisé en ce qu'il comporte des vérifications du sens du trajet parcouru par le véhicule sur les balises à la suite des calculs du cap.

13. Procédé de navigation selon l'une quelconque des revendications 11 ou 12, caractérisé en ce que les lectures comportent des identifications de la polarité Nord ou Sud des champs magnétiques.

14. Procédé de navigation selon l'une quelconque des revendications 11 à 13, caractérisé en ce que, quand le véhicule passe par-dessus un aimant, l'ensemble électronique soustrait des lectures de champ magnétique une lecture antérieure de champ magnétique quand le véhicule ne passait pas par-dessus un aimant.

**Claims**

1. Navigation system for the operation of an autonomous vehicle performing a travel (To) over the ground and which is equipped with permanent magnets (151 to 155), the vehicle having motor means (120) and steering means (121), magnetic field detectors (2) sensing magnetic fields emitted by the magnets, the vehicle incorporating an electronic system (8, 49) able to control the motor and steering means with the aid of informations supplied to it by the detectors, the detectors being arranged on the vehicle in accordance with a transverse row, the system having markers, each constituted by permanent magnets arranged in line in accordance with the path of the vehicle, the magnets being introduced vertically into the ground in such a way that a polarity of each magnet is detected by the detectors, characterized in that the markers (3) are separated by gaps (L2) which are larger than the length of the markers, each marker being constituted by a first group of magnets (151, 155), spaced by given distances, whose polarities are such as to supply informations on the heading ($\alpha$) followed by the vehicle with respect to the line of the marker, as well as a second group of magnets (152 to 154), whereof the polarities are such as to supply informations for guiding the vehicle on a subsequent portion of the path up to a following marker by means of coded messages, the magnets of the two groups being located at given locations of each marker.

2. Navigation system according to claim 1, characterized in that the permanent magnets of a marker are buried in the ground along a single line (LL), the transverse row of detectors passing successively above each permanent magnet during the vehicle travel.

3. Navigation system according to either of the claims 1 and 2, characterized in that the magnets of the first group comprise a pair of magnets at the end of the marker.

4. Navigation system according to any one of the claims 1 to 3, characterized in that the magnets of the first group are two unlike magnets (151, 155).

5. Navigation system according to claim 1, characterized in that the markers have magnets of opposite north and south polarities, the vehicle guidance informations being coded according to a binary code.

6. Navigation system according to claim 1, characterized in that the markers have magnets with opposite north and south polarities, the vehicle guidance informations being coded according to a ternary code.

7. Navigation system according to claim 1, characterized in that the detectors (2) in each case incorporate a pair of pickups (20,30), which produce two currents induced under the influence of the magnetic field produced by the permanent magnets and in that the electronic system has a means for subtracting said induced currents.

8. Vehicle navigation system according to claim 7, characterized in that the pickups (20,30) are energized by a periodic voltage, all retaining the same sign.

9. Navigation system according to claim 8, characterized in that the electronic system comprises, for each detector (2), a phase shift circuit (16, 17, 23, 33) for the currents induced in each pickup as a function of their intensity, a subtracting circuit (24, 34, 40) for the phase-shifted currents and a phase comparator (45), which supplies a signal as a function of the phase shift between a periodic current from the subtractor (24, 34, 40) and a reference current of the same frequency.

10. Navigation system according to claim 9, characterized in that it comprises a potentiometer (12) placed between the power supply (9) and each pair of pickups (20,30).

11. Navigation method for the operation of an autonomous vehicle carrying out a travel (To) on the ground provided with permanent magnets (4,5; 151 to 155) grouped in the form of markers (3), the vehicle having motor means (120) and steering means (121) controlled by an electronic system and a transverse row of magnetic field detectors (2) connected to the electronic system, the magnets being vertically buried in the ground in such a way that a polarity of each magnet is detected by the detectors, characterized in that it comprises, the markers (3) being separated by gaps larger than the length of the markers, carrying out periodic magnetic field readings by the detectors in order to reference mark the passage of the vehicle above the magnets, the calculation by the electronic system for each marker of the heading followed by the vehicle with the aid of transverse positions with respect to the vehicle of a first group of magnets (151, 155), spaced by predetermined distances from the magnet, the deduction by the electronic system of the vehicle guidance informations on a subsequent portion of the travel with the aid of a second group of magnets (152 to 154) arranged in such a way as to supply coded messages of the marker, the magnets of the two groups being located at given locations of each marker, and controlling the motor and steering members as a function of the heading ($\alpha$) followed by the vehicle and coded messages.

12. Navigation method according to claim 11, characterized in that it involves checks of the direction of the travel taken by the vehicle on the markers following heading calculations.

13. Navigation method according to either of the claims 11 or 12, characterized in that the readings involve identifications of the north or south polarity of the magnetic fields.

14. Navigation method according to any one of the claims 11 to 13, characterized in that when the vehicle passes over a magnet, the electronic system subtracts from the magnetic field readings an earlier magnetic field reading when the vehicle was not passing over a magnet.

**Patentansprüche**

1. Navigationssystem zum Betrieb eines autonomen Fahrzeugs, auf einem mit Permanentmagneten (151, 155) versehenen Boden einer festgelegten Bahn folgend, wobei das Fahrzeug über Antriebs-und Lenkeinrichtungen (120-121) verfügt und über Magnetfelddetektoren (2), die auf die von den Magneten aufgebauten Magnetfelder ansprechen, wobei das Fahrzeug ein Elektroniksystem (8, 49) umfaßt, das imstande ist, die Antriebs- und Lenkeinrichtungen zu steuern mittels Informationen, die es von den Detektoren erhält, wobei die Detektoren an dem Fahrzeug in einer quergerichteten Reihe angeordnet sind, wobei das System Baken (3) umfaßt, jede gebildet durch Permanentmagnete, linear angeordnet, der Bahn des Fahrzeugs entsprechend, wobei die Magnete vertikal in den Boden eingelassen sind, so daß eine Polarität eines jeden Magneten von den Detektoren erfaßt wird,
dadurch **gekennzeichnet**,
daß die Baken (3) getrennt sind durch Intervalle (12), die größer sind als die Länge der Baken, wobei jede Bake sich zusammensetzt aus einer ersten Gruppe Magnete (151 und 155), angeordnet mit festgelegten Abständen, deren Polaritäten so angeordnet sind, daß sie Informationen über den Kurs (α) liefern, dem das Fahrzeug folgt, bezogen auf die Linie der Bake, sowie einer zweite Gruppe Magnete (152 bis 154), deren Polaritäten so angeordnet sind, daß sie Informationen liefern, um das Fahrzeug auf einen anschließenden Teilabschnitt der Bahn zu führen, mittels codierter Nachrichten, bis zu einer folgenden Bake, wobei die Magnete der beiden Gruppen sich an bestimmten Stellen jeder Bake befinden.

2. Navigationssystem nach Anspruch 1, dadurch gekennzeichnet, daß die Permanentmagnete einer Bake einer Linie (LL) entsprechend in den Boden eingelassen sind, wobei die Detektoren-Querreihe sukzessive über jedem Permanentmagneten durchläuft, wenn das Fahrzeug seiner Bahn folgt.

3. Navigationssystem nach einem der Ansprüche 1 oder 2, dadurch gekennzeichnet, das die Magneten der ersten Gruppe ein Magnetepaar an den Enden der Bake umfassen.

4. Navigationssystem nach einem der Ansprüche 1 bis 3, dadurch gekennzeichnet, daß die Magnete der ersten Gruppe zwei ungleiche Magnete (151, 155) sind.

5. Navigationssystem nach Anspruch 1, dadurch gekennzeichnet, daß die Baken Magnete entgegengesetzter Nord- und Südpolaritäten umfassen, wobei die Führungsinformationen des Fahrzeugs in einem Binärcode codiert werden.

6. Navigationssystem nach Anspruch 1, dadurch gekennzeichnet, daß die Baken Magnete entgegengesetzter Nord- und Südpolaritäten umfassen, wobei die Führungsinformationen des Fahrzeugs in einem Ternärcode codiert werden.

7. Navigationssystem nach Anspruch 1, dadurch gekennzeichnet, daß die Detektoren (2) je ein Paar Sonden (20 und 30) umfassen, die zwei Ströme erzeugen, induziert unter dem Einfluß des Magnetfelds, erzeugt durch die beiden Permanentmagnete, und daß das Elektroniksystem eine Einrichtung enthält, um diese induzierten Ströme zu subtrahieren.

8. Navigationssystem nach Anspruch 7, dadurch gekennzeichnet, daß die Sonden (20 und 30) gespeist werden mit einer periodischen elektrischen Spannung, die immer dasselbe Vorzeichen behält.

9. Navigationssystem nach Anspruch 8, dadurch gekennzeichnet, daß das Elektroniksystem für jeden Detektor (2) einen Phasenschieberkreis (16, 17, 23, 33) der in die einzelnen Sonden induzierten Ströme in Abhängigkeit von ihrer Intensität, einen Subtrahierkreis (24, 34, 40) der phasenverschobenen Ströme und einen Phasenkomparator (45) umfaßt, der ein Signal liefert in Abhängigkeit von der Phasenverschiebung zwischen einem von dem Subtrahierer (24, 34, 40) periodisch ausgegebenen Strom und einem Bezugsstrom gleicher Frequenz.

10. Navigationssystem nach Anspruch 9, dadurch gekennzeichnet, daß es ein Potentiometer (12) umfaßt, eingefügt zwischen der Stromversorgung (9) und jedem Sondenpaar (20, 30).

11. Navigationsverfahren für den Betrieb eines autonomen Fahrzeugs, einer Bahn (To) folgend auf einem Boden, der versehen ist mit Permanentmagneten (4, 5, 151, 155), gruppiert zu Baken (3), wobei das Fahrzeug Antriebs- und Lenkeinrichtungen (120-121) umfaßt, gesteuert von einem Elektroniksystem und einer quer ausgerichteten Reihe von Detektoren (2) für Magnetfelder, angeschlossen an das Elektroniksystem, wobei die Magnete vertikal in den Boden eingelassen sind, so daß die Detektoren auf eine Polarität jedes Magneten ansprechen,
dadurch **gekennzeichnet**,
wobei die Baken (3) durch Intervalle getrennt sind, die größer sind als die Länge der Bakee, daß es darin besteht, durch die Detektoren peroidisch die Magnetfelder abzulesen, um den Durchgang des Fahrzeugs über den Magneten zu orten, mittels des Elektroniksystems an jeder Bake den von dem Fahrzeug verfolgten Kurs mit Hilfe der Querpositionen, bezogen auf das Fahrzeug, einer ersten, mit festgelegten Abständen angeordneten Gruppe von Magneten (151, 155) der Bake zu berechnen, mittels des Elektoniksystems Führungsinformationen des Fahrzeugs über einen nachfolgenden Abschnitt der Bahn abzuleiten mit Hilfe einer zweiten Gruppe von Magneten (152 bis 154) der Bake, angeordnet, um codierte Nachrichten zu liefern, wobei die Magnete der beiden Gruppen an bestimmten Stellen jeder Bake angebracht sind, und die Antriebs- und Lenkeinrichtungen zu steuern in Abhängigkeit von dem von dem Fahrzeug verfolgten Kurs (α) und den codierten Nachrichten.

12. Navigationsverfahren nach Anspruch 11, dadurch gekennzeichnet, daß es Überprüfungen der Richtung der von dem Fahrzeug auf den Baken durchlaufenen Bahn gibt, anschließend an die Kursberechnungen.

13. Navigationsverfahren nach einem der Ansprüche 11 oder 12, dadurch gekennzeichnet, daß die Ablesungen Identifikationen der Nord- oder Südpolarität des Magnetfelds enthalten.

14. Navigationsverfahren nach einem der Ansprüche 11 bis 13, dadurch gekennzeichnet, daß das Elektroniksystem, wenn das Fahrzeug über einem Magneten durchfährt, von den Magnetfeldablesungen eine vorhergehende Magnetfeldablesung subtrahiert, als das Fahrzeug nicht über einem Magnetfeld durchfuhr.

FIG. 1

FIG. 3

FIG. 2

EP 0 278 853 B1

FIG. 4

FIG. 5

FIG.6

FIG. 7

FIG. 8

EP 0 278 853 B1